# EUROPÄISCHE PATENTSCHRIFT

(11) **EP 2 370 331 B1**
(45) Veröffentlichungstag und Bekanntmachung des Hinweises auf die Patenterteilung: **19.04.2017**
(21) Anmeldenummer: 09803996.9
(22) Anmeldetag: 27.11.2009
(51) Int. Cl.: B65G 43/10

(54) **DEZENTRAL GESTEUERTE MATERIALFÖRDERUNG**
LOCALLY CONTROLLED MATERIAL TRANSPORT
TRANSPORT DE MATÉRIAUX À COMMANDE DÉCENTRALISÉE

(30) Priorität: 28.11.2008 DE 102008059529
(43) Veröffentlichungstag der Anmeldung: 05.10.2011
(73) Patentinhaber: Karlsruher Institut für Technologie, 76131 Karlsruhe (DE)
(72) Erfinder: STOLL, Thomas, 76137 Karlsruhe (DE); FURMANS, Kai, 76337 Waldbronn (DE); SCHÖNUNG, Frank, 76676 Graben-Neudorf (DE); MAYER, Stephan, 73765 Neuhausen (DE)
(74) Vertreter: Vossius & Partner Patentanwälte Rechtsanwälte mbB
(86) Internationale Anmeldenummer: PCT/DE2009/001670
(87) Internationale Veröffentlichungsnummer: WO 2010/060419

(56) Entgegenhaltungen:
- EP-A1- 1 897 825
- WO-A1-00/71445
- WO-A2-02/072453
- WO-A2-2006/102691

## Beschreibung

Die vorliegende Erfindung betrifft das oberbegrifflich Beanspruchte und bezieht sich somit auf die Förderung von Gegenständen.

Die Förderung von Gegenständen ist bekannt. Sie kann relativ komplexe Verteilungsaufgaben umfassen, beispielsweise beim Transport von Koffern aus den Schalterhallen eines Flughafens zu den entsprechenden Terminals. Erstrebenswert ist hier ein schneller Transport, der fehlerfrei sein soll, auch wenn von einem einzelnen Schalter Koffer zu unterschiedlichen Terminals geschickt werden müssen.

Ein weiteres Beispiel ist der Transport von Fertigungsmaterialien in produzierenden Unternehmen. Dabei müssen zu verarbeitende Gegenstände aus einem Lager zu den verarbeitenden Stationen gesandt werden. Die jeweiligen Ausgangsprodukte, wie beispielsweise Schrauben bestimmter Größe, müssen dabei oftmals zu wechselnden Stellen transportiert werden, etwa unterschiedlichen Endmontageplätzen; dies geschieht häufig unter Verwendung von Transportbehältern wie Kisten, die nach Entnahme der zu transportierenden Gegenstände wieder als Leergut zurücktransportiert werden müssen. Dies wird typisch durch einen Kreistransport der Behälter realisiert.

Die Steuerung solcher Transportsysteme ist komplex und, allein schon aufgrund ihrer Komplexität, störungsanfällig. Dies gilt umso mehr, wenn weitere Anforderungen an das Transportsystem gestellt werden, beispielsweise jene, bestimmte Gegenstände mit höherer Dringlichkeit zu transportieren.

Ein Fördersystem mit einer Bandförderung ist aus der US 2007/0,059,144 A1 bekannt. Dabei wird vorgeschlagen, Gegenstände von einem Quellförderband auf ein Zielförderband mittels eines Liftes individuell zu versetzen.

Die US 2004/0,084,284 beschreibt eine mit angetriebenen Walzen versehene Förderstrecke, wobei eine Steuerung die Walzen gruppenweise antreibt.

Die US 2007/0,222,612 beschreibt ein Förderband aus raupenkettenartigen Elementen, die jeweils mit einem RFID-Transponder ausgestattet sind.

Die US-PS 6,021,888 beschreibt ein Fördersystem aus in Reihe geschalteten Förderelementen, die die Anwesenheit von Gegenständen auf den Walzen der Fördermittel erfassen können und im Ansprechen darauf die Antriebseinheiten für das Fördermittel aktivieren oder anhalten. Die einzelnen benachbarten Einheiten können Informationen miteinander austauschen. Es wird ausgeführt, dass bei Systemen mit zentraler Steuerung, bei welchen jede Fördereinheit einzeln angesprochen werden soll, ein hoher Verkabelungsaufwand erforderlich sei. Es werden in dieser Schrift auch Systeme angesprochen, nach welchen in einzelnen Transportmodulen selektierbare Programme abgelegt werden können und ein geeignetes Programm durch Anwahl geeigneter Speicher, in denen die Förderprogramme abgelegt sind, gewählt werden kann.

Mit dem System der US-PS 6,021,888 soll erreicht werden, dass bei ausgedehnten Fördersystemeinheiten eine Feinsteuerung der Positionierung ermöglicht wird und auch die Förderlinien kurzfristig geändert werden können. Es wird im übrigen vorgeschlagen, den Antrieb einer Fördereinheit abhängig davon anzusteuern, ob stromabwärts Sensoren Gegenstände erfassen oder nicht.

Die US-PS 3,880,298 schlägt ein Endlosförderband vor, bei welchem Gegenstände mit identifizierbaren Zielcodes ausgestattet sind und vom Band entsprechend ihrer Zielcodes in quer zum Band verlaufende Ableitstrecken abgeleitet werden.

Aus der EP 1 362 645 A1 ist eine Anlage zum Verarbeiten von Retouren bekannt, wobei mindestens eine Bewertungsstation, an der die Retouren von einem Zubringförderband zur Bewertung entnommen werden, und ein Abfuhrförderband zum Abtransportieren der Retouren von der Bewertungsstation sowie eine Eingabeeinrichtung vorgesehen sein sollen, und wobei das Abfuhrförderband in identifizierbare Segmente unterteilt sein soll und die Steuereinrichtung ein Auswahlmodul für das Abfuhrfördermittel aufweist, das dazu ausgebildet sein soll, mittels des Datensatzes ein Zielsegment auf dem Abfuhrförderband für jede Retoure zu bestimmen und eine Ausgabevorrichtung vorgesehen sein soll, die von der Steuereinrichtung angesteuert ist, um das Zielsegment auszugeben.

Aus der US-PS 4,240,538 ist eine Förderanordnung bekannt, mit welcher einlaufende Magazine auf einen von drei Ausgängen verteilt werden können.

Aus der US 2003/0,075,416 A1 sind ein Verfahren und eine Vorrichtung zum Messen und Sortieren von Paketen einschließlich des Konzepts der Bestimmung von zumindest einer Komponente des Schwerpunktes der Pakete bekannt, wobei die Bestimmung der Schwerpunktskomponente die Anwendung einer Neigebetätigung in Verbindung mit dem Gebrauch von Sensoren zur Erfassung der Bewegung der Pakete während des Neigens umfasst. Die bekannte Vorrichtung zielt auf Hochgeschwindigkeitssortiersysteme.

Aus der US 2002/0,010,527 A1 ist ein Steuersystem für ein modulares Fördersystem mit einer angetriebenen Walze zur Bewegung von Objekten auf dem modularen Fördersystem und einem Objektsensor zum Erfassen von Objekten auf dem modularen Fördersystem bekannt, wobei das Steuersystem eine Antriebssteuerung umfasst, die dazu angeordnet ist, eine motorisierte Walze zu steuern; eine Kommunikationsschnittstelle, die dazu angepasst ist, das Steuersystem mit einem adressbasierten Netzwerk zu verbinden, um auslaufende adressierte Daten an andere Vorrichtungen in dem adressbasierten Netzwerk auszusenden und adressierte Daten aus dem adressbasierten Netzwerk zu empfangen; und ein Logiksystem, das dazu angepasst ist, ein Signal von einem der Objektsensoren und der Kommunikationsschnittstelle zu empfangen; und ein Walzensteuersignal an der angetriebenen Walze gemäß dem Eingangssignal vorzusehen. Es wird vorgeschlagen, dass eine zentrale Steuerung vorgesehen ist, die nach der Konfiguration des Systems eliminiert werden kann, so dass das System danach ohne zentrale Steuerung arbeiten kann. Es wird zwar angegeben, dass Förderkontrollstrategien wie Vereinzelung, Akkumulation und dergleichen ohne zentrale Steuerung automatisch durch Kommunikation der Einzelelemente implementiert werden kann und dass Zustände wie die Gegenwart eines Objektes an andere Fördermodule kommuniziert werden können.

Aus der US 6,240,335 B1 und der US 6,853,876 B2, die zur gleichen Patentfamilie gehören, ist ein automatisiertes Transportsystem für den Materialfluss bekannt, bei welchem ein Transportkontroller vorgesehen wird, der Befehle von einem herkömmlichen Materialkontrollsystem empfängt und diese Befehle in Unterbefehle herunterbricht, die er an ausgewählte Steuerlogik-Computer richtet, um mit einem bestimmten Container durch Bewegung zu einem Ziel oder dergleichen in Wechselwirkung zu treten. Der Transportkontroller soll die Kontrolllogik-Computer basierend auf der Transportsystemtopologie, dem Inhalt des vom Materialsteuersystem erhaltenen Befehls und Wissen darüber, welche Bereiche des Transportsystems durch jeweilige Kontrolllogik-Computer gesteuert sind, auswählen. Es wird dann vorgeschlagen, dass ein verteiltes Verfahren zur Leitung von Material von einer Quelle zu einem Ziel in einem Materialtransportsystem Bahnzonen und "Richtungsgeber" umfasst, welche die Bahnzonen verbinden, wobei die Richtungsgeber Routingtabellen umfassen, die Routinginformationen für eine Vielzahl von Routen über das Materialtransportsystem zu einem Bestimmungsort umfassen, wobei das Verfahren umfassen soll, dass Material aus der Quelle losgeschickt wird, falls das Material in eine benachbarte Bahn, die einen Richtungsgeber besitzt, eintritt, durch welche das Material hindurchtreten muss, um zum Ziel zu gelangen, der entsprechende Richtungsgeber, das heißt die entsprechende Leitinstanz, informiert wird, der Richtungsgeber im Ansprechen auf den Hinweis eine optimale Route für das Material, basierend auf dem Ziel und der abgespeicherten Routeninformation auswählt, die für jede Materialtransportsystembestimmung einen Richtungsgeberausgangswinkel und eine bahnmetrikkennzeichnende Qualität eines Wegs zur Bestimmung, ausgehend von dem Richtungsgeberaustrittswinkel, bestimmt wird, der Richtungsgeber nachfolgend das Material verzögert, auf den Richtungsgeberaustrittswinkel dreht, der zu der optimalen Route gehört und das Material entlang der optimalen Route wieder loslaufen lässt und automatisch die gespeicherte Routeninformation modifiziert wird um die Hinzufügung eines neuen Bestimmungsortes zu dem Materialtransportsystem, wobei der neue Bestimmungsort seine Gegenwart zu seinem unmittelbar stromaufwärtigen Nachbarn unter Verwendung einer Ankündiger-Nachricht mitteilt, die eine Ansagemetrik umfasst. In einem veranschaulichten Ausführungsbeispiel soll ein Geschwindigkeitsprofil erstellt werden, das maximale Geschwindigkeiten und Beschleunigungen beziehungsweise Verzögerungen für gegebene Pakete bestimmen soll. Es wird auch vorgeschlagen, Befehle und bestimmte Bedingungen vorab abzulegen, etwa um viele Befehle kurz hintereinander seriell ausführen zu lassen.

Aus der US 2006/0,293,784 A1 ist ein automatisch verteilendes Verkaufssystem bekannt. Dabei soll ein zentraler Computer, der das gesamte System steuert, vorgesehen sein.

Aus der WO 00/71445 A1 ist eine gattungsgemäße modulare Kontrollarchitektur für eine Fördervorrichtung bekannt, bei welcher autonome Zonen gebildet sind und wobei die Software, die jede autonome Zone in der Fördervorrichtung kontrolliert, jeweils identisch ist und nur mit der Software kommuniziert, welche die direkten Nachbar steuert.

Die WO 2006/106291 schlägt vor, bei einer elektrisch dezentral steuerbaren Fördervorrichtung den Kommunikationspfad ringförmig zu schließen und betriebsgefährdende oder betriebsstörende Zustände zu protokollieren.

Die WO 00/71445 A1 befasst sich ebenfalls mit dem Transport von Waren auf einem Fördersystem, bei dem Abschnitte in einem Fördersystem reserviert werden, wenn ein Warenträger, der in einen Abschnitt hineintransportiert wird, diesen auch wieder verlassen kann. Ein Streckenabschnitt kann für den Transport eines Warenträgers reserviert werden und Anforderungen können in einer Warteliste gespeichert werden, um aus der gespeichterten Warteliste nach Abschnittfreigabe eine Anforderung auszuwählen.

Die EP 1897 825 schlägt eine weitere dezentralisierte Steuerung vor.

Die WO 2006/106291 schlägt vor, bei einer elektrisch dezentral steuerbaren Fördervorrichtung den Kommunikationspfad ringförmig zu schließen und betriebsgefährdende oder betriebsstörende Zustände zu protokollieren.

Die WO 00/71445 A1 befasst sich ebenfalls mit dem Transport von Waren auf einem Fördersystem, bei dem Abschnitte in einem Fördersystem reserviert werden, wenn ein Warenträger, der in einen Abschnitt hineintransportiert wird, diesen auch wieder verlassen kann. Ein Streckenabschnitt kann für den Transport eines Warenträgers reserviert werden und Anforderungen können in einer Warteliste gespeichert werden, um aus der gespeichterten Warteliste nach Abschnittfreigabe eine Anforderung auszuwählen.

Die EP 1897 825 schlägt eine weitere dezentralisierte Steuerung vor.

Aus der WO 2006/102691 ist eine elektrisch dezentral steuerbare Fördervorrichtung für stückhaftes Fördergut bekannt, umfassend zumindest eine elektrisch steuerbare Antriebsvorrichtung für wenigstens ein Förderorgan und/oder zumindest eine elektrische Erfassungsvorrichtung für betriebsrelevante Zustände, wobei die Antriebsvorrichtung und/oder die Erfassungsvorrichtung mit einer elektrischen Steuervorrichtung zur Steuerung der Abläufe der Fördervorrichtung verbunden sind und die Steuervorrichtung zumindest eine draht- beziehungsweise leitungsgebundene Kommunikationsschnittstelle zur datentechnischen Verbindung mit der Steuervorrichtung einer weiteren Fördervorrichtung aufweist, wobei vorgesehen sein soll, dass mindestens eine Steuervorrichtung zumindest drei, bevorzugt vier funktional identisch einheitlich ausgeführte Kommunikationsschnittstellen zur datentechnischen Anbindung an kommunikationskompatible Steuervorrichtungen bevorzugt unmittelbar benachbarter beziehungsweise die Förderstrecke fortsetzender Fördervorrichtungen aufweist. Es wird dort auch vorgeschlagen, dass die Kommunikationsschnittstellen durch ETHERNET-Ports gebildet sind. Die Steuervorrichtung soll zur Ausführung einer adressierbaren Routingfunktion für ankommende Datenpakete ausgebildet beziehungsweise programmiert sein.

Vorgeschlagen wird dort auch, dass ein Mikrokontroller, der der Steuervorrichtung der dezentral steuerbaren Fördervorrichtung zugeordnet ist, bei Empfang mehrerer Datenpakete mit unterschiedlichen Prioritätskennzeichnungen zur Bildung einer Prioritätenreihenfolge für die Abarbeitung beziehungsweise Bearbeitung der Datenpakete ausgebildet ist, dass der Mikrokontroller zum Empfangen und Auswerten sowie zur Erstellung und Absendung von Datenpaketen ausgebildet ist und dass die Steuervorrichtung zur Ermittlung der fördertechnischen Auslastung oder der Fördergüterbelastung der Fördervorrichtung und zur Protokollierung und/oder Weiterleitung der ermittelten Daten ausgebildet ist. Mit diesem System soll eine elektrisch steuerbare Fördervorrichtung zur Bildung eines zusammenhängenden, verzweigten Fördersystems geschaffen werden, welches einen einfachen Aufbau eines umfassenden Datennetzwerkes zwischen den einzelnen Fördervorrichtungen ermöglicht und es soll zudem oder dennoch eine erhöhte Verfügbarkeit beziehungsweise Ausfallsicherheit einer aus mehreren Fördervorrichtungen gebildeten Förderanlage erreicht werden.

Mit der bekannten Anordnung ist es möglich, den Materialfluss entlang eines Fördersystems ohne Vorgabe der exakt an einer einzelnen Stelle des Fördersystems erforderlichen Vorgänge, wie Ein- und Ausschalten der Transportmittel eines Fördermoduls, das Ein- und Ausschalten eines Längs- und Quertransportes usw. zentral vorgeben zu müssen. Gleichwohl wird ein als Materialflussrechner bezeichnetes zentrales System benötigt, welches die Wege bestimmt, welche ein Gegenstand von einem Ausgangs- zu einem Zielort nehmen soll. Die mit derartigen Modulen aufgebauten Systeme sind steuerungstechnisch immer noch sehr kompliziert.

Das Erfordernis, auf einen zentralen Rechner zugreifen zu müssen, der den Materialfluss steuert, erschwert immer noch die Einrichtung von Fördersystemen. Gerade bei stark vernetzten Wegen zwischen einer Vielzahl von potenziellen Versendestellen und einer Vielzahl möglicher Empfangsstellen ergeben sich ausgesprochen komplexe, zentral nur schwer zu steuernde Systeme, was insbesondere die Anpassung, etwa durch Hinzufügen weiterer Quellen beziehungsweise Sendestationen oder Sende- beziehungsweise Entnahmestellen erschwert, etwa wenn in einem Industriebetrieb aufgrund einer hohen Auftragslage plötzlich an mehr Arbeitsplätzen gefertigt werden soll.

Zwar gibt es, wie das Internet zeigt, Netzwerke, in denen selbst organisiert Übertragungswege aufgebaut werden können, aber die Übertragung von Daten unterscheidet sich in vielerlei Hinsicht von dem Transport von Gegenständen. So ist es bei der Datenübertragung üblich, große Datenpakete aufzuteilen, nacheinander zu versenden und gegebenenfalls auch unterschiedliche Wege für unterschiedliche Datenpaketteile in Kauf zu nehmen; bei realen Gegenständen ist dies einleuchtenderweise nicht möglich.

Es ist weiter möglich, in Datennetzwerken die einlaufenden Datenpakete zwischenzuspeichern, bevor sie weitergesendet werden, obwohl prinzipiell die Möglichkeit bestünde, ähnlich wie bei Datenroutern und Datenswitches an Knotenpunkten eines Materialflusssystems eine Zwischenspeicherung vorzunehmen, wäre dies extrem aufwendig und ist im Regelfall nicht tragbar. Daher ist dafür Sorge zu tragen, dass Materialpakete möglichst ungehindert eine Strecke durchlaufen können. Andernfalls besteht die Gefahr, dass längerfristig das ganze System zum Stillstand kommt.

Zudem kommt es bei typischen Datennetzen sehr häufig zu Kollision von Daten, etwa wenn bei einer bidirektionalen Kommunikation beide Teilnehmer versuchen, gleichzeitig zu sprechen. Da die kollidierten Pakte beim jeweiligen Sender gespeichert bleiben, bis der störungsfreie Empfang bestätigt wird, ist ein Neuversand jederzeit möglich und eine Kollision insoweit unkritisch.

Es wäre wünschenswert, den Aufbau von Materialflusssystemen vereinfachen zu können, den Betrieb störungsfreier zu gestalten und dabei ein kostengünstiges Materialflusssystem vorsehen zu können. Wünschenswert ist auch, zumindest einen Teil dieser Forderungen wenigstens partiell zu erfüllen.

Die Aufgabe der vorliegenden Erfindung besteht darin, Neues für die gewerbliche Anwendung bereitzustellen.

Die Lösung dieser Aufgabe wird durch die Merkmale des Anspruchs 1 beschrieben. Bevorzugte Ausführungsformen finden sich in den Unteransprüchen.

Ein erster Grundgedanke befasst sich somit mit einem Verfahren zur Steuerung eines Materialflusssystems, worin das Material in Warenpaketen transportierende Module vorgesehen sind, welche Materialflusswege von einem Warenpaketstart zu einem Warenpaketziel autonom untereinander aushandeln, indem Module für den Transport eines bestimmten, identifizierten Warenpakets reserviert und nach dem Transport des bestimmten, identifizierbaren Warenpakets freigegeben werden, wobei die Module sich reservieren, indem Vorreservierungstoken angenommen, gegebenenfalls eine Vorreservierung auf Tokenannahme erfolgt, das Vorreservierungstoken weitergereicht und auf Bestätigung der Vorreservierung von einem stromabwärtigen Fördermodul die Vorreservierung zu einer Reservierung erstarkt, und wobei sich die Module für den Transport eines Warenpakets zu einer bestimmten Zeit oder einem bestimmten Zeitraum reservieren.

Die vorliegende Erfindung hat somit erkannt, dass ein autonomes, also im vorliegenden Sinne nicht zwingend von einer zentralen Steuerung hinsichtlich des Materialflusses zu steuerndes Fördersystem für Materialflüsse erhalten werden kann, wenn die einzelnen Module dazu ausgebildet sind, sich für den Transport von Warenpaketen zu reservieren. Indem somit die einzelnen Fördermodule in einem System vor dem eigentlichen Transport der Waren, also dem physikalischen Fließen des Materials miteinander darüber verhandeln, wie der Materialfluss erfolgen soll, können Situation vermieden werden, in welchen andernfalls eine wechselseitige Blockierung auftreten könnte. Als multidirektional wird ein Fördermodul dabei bereits dann verstanden, wenn eine Förderung in zwei entgegengesetzte Richtungen möglich ist. Dies ist im einfachsten Fall gegeben, wenn eine lineare Förderstrecke vorliegt, die von Warenpaketen in zwei Richtungen durchlaufen werden kann; dass darüber hinaus eine Multidirektionalität auch gegeben ist, wenn etwa ein dreiseitiges Fördermodul ein aus einer Richtung empfangenes Warenpaket in eine der beiden verbleibenden Richtungen weiterleiten kann, sei erwähnt. Typisch und besonders bevorzugt sind die Fördermodule zur Förderung von Warenpaketen in vier Richtungen, nämlich "vorwärts und rückwärts" und "links und rechts", also in zwei zueinander quere Achsen ausgebildet. Dass darüber hinaus andere Geometrien, etwa sechseckige Module oder dergleichen möglich wären, sei jedoch der Vollständigkeit halber offenbart. Die Bevorzugung viereckiger, insbesondere quadratischer Module ist darin begründet, daß sich hier die motorische Ansteuerung für die Bewegungsrichtungen besonders einfach in per se bekannter Weise gestalten lässt. Dass zum eigentlichen Transport der Warenpakete Fördermittel am Fördermodul vorgesehen sind, die motorisch, typisch elektromotorisch angetrieben sind, wird einleuchtend sein. Die Steuerung ist in einem solchen Fall dazu ausgebildet, die entsprechenden Fördermittel des Fördermoduls wie erforderlich und gegebenenfalls reserviert zu betätigen.

Es sei erwähnt, dass das Fördermodul mit einer lokalen Intelligenz ausgestattet sein kann, die eine geeignete Ansteuerung der Motoren vorsieht und/oder verbessert, beispielsweise durch Vermeidung des ruckartigen Anfahrens, der Berücksichtigung zulässiger Maximalbeschleunigungen, zulässiger Querbeschleunigungen, warenpaketabhängiger Ansteuerungen und dergleichen.

Besonders bevorzugt ist es auch, wenn das Fördermodul ein zu förderndes Warenpaket identifizieren kann. Dazu sind bevorzugt Identifikationsmittel vorgesehen, wie Barcodeleser beziehungsweise, was hier gleichgesetzt wird, Lesegeräte für andere graphische Identifikationsmarken, RFID-Transponder, Gewichtssensoren zur Erfassung eines charakteristischen Warenpaketgewichtes, Größensensoren, Farbsensoren oder Kameras, insbesondere mit zur Warenpaketidentifikation geeigneter Bilderkennung. Auf derartige Identifikationsmittel wird vorliegend nicht näher eingegangen, da sie insoweit dem Fachmann bekannt sind.

Die logische Schnittstelle, über welche die Steuerung Signale empfangen und/oder senden kann, wird typisch eine Vielzahl physikalischer Ein- und Ausgänge besitzen; besonders bevorzugt ist es, wenn die Schnittstelle für jedes an das Fördermodul ansetzbare Nachbarmodul einen eigenen Ein- und/oder Ausgang aufweist; dies verringert den Verkabelungsaufwand bei Aufbau eines Materialflusssystemes darauf, Nächste-Nachbar-Verbindungen vorzusehen. Eine Verkabelung kann dann besonders einfach gestaltet werden. Die Kommunikation erfolgt insbesondere in der bevorzugten Variante bevorzugt über Nächste-Nachbar-Kommunikation. Dass statt dessen auch andere Kommunikationsmöglichkeiten gegeben sind, sei erwähnt. Per se würde es ausreichen, jedes Fördermodul an ein großes Netzwerk anzuschließen. Gerade bei ausgedehnten Materialflusssystemen ergibt sich dann aber ein nicht unerheblicher Verkabelungsaufwand mit entsprechend hoher Fehleranfälligkeit.

Es ist besonders bevorzugt, wenn die Steuerung dazu ausgebildet ist, Topologieinformation über das Materialflussfördersystem, in welchem sie angeordnet ist, zu speichern. Derartige Topologieinformation könnte bei einer Einrichtung oder Konfiguration des Materialflussfördersystems in das einzelne Fördermodul eingespielt, das heißt einkonfiguriert, werden; allerdings ist es bevorzugt, wenn die Steuerung beziehungsweise das einzelne Fördermodul in der Lage ist, Topologieinformation über das Gesamtsystem zumindest in dem erforderlichen Ausmaß zu erhalten und autark aufzubauen; dies verringert den Aufwand bei Inbetriebnahme und/oder Änderungen des Systems insbesondere auch im Versagensfall einzelner Module erheblich.

Die Steuerung wird demgemäß bevorzugt dazu ausgebildet sein, von ihr gespeicherte Topologieinformation durch Kommunikation mit anderen Modulen zu ergänzen und/oder zu aktualisieren, insbesondere durch Austausch von Routingtabellen. Dabei kann in einem ersten Initialisierungsschritt zunächst jedem Nachbarmodul nur die eigene Identifikationsnummer mitgeteilt werden und eine entsprechende Identifikationsnummer empfangen werden, die Port- d.h. entsprechend der Ein-Ausgangsbezeichnung zugeordnet mit dem Abstand abgelegt wird; es kann herstellungsseitig darauf geachtet werden, dass jedes Fördermodul eine eineindeutige Fördermodulkennzeichnung erhält; alternativ wären verschiedene Verfahren anwendbar, wenn eine Identifikationsnummer doppelt vergeben wäre; darauf braucht hier aber nicht näher eingegangen werden.

Nach dem ersten Austausch mit einem Nachbarmodul wird dann die Routingtabelle um die Information der in einzelnen Richtungen liegenden Nachbarmodule ergänzt und gegebenenfalls in der Routingtabelle auch eingetragen, mit welchen Nachbarmodulen die eigenen Nachbarn wiederum verbunden sind. Wenn dieser Schritt oft genug wiederholt wird, erhält jedes Modul einen vollständigen Überblick über die Gesamttopologie des Materialflusssystems; dabei wird davon ausgegangen, dass die Gesamttopologie beherrschbar und überschaubar ist; bei typischen Materialflussfördersystemen, wie sie etwa auch in komplexen Fällen sehr großer Industriebetriebe oder in hochausgedehnten Flughäfen gegeben ist, kann dieser Förderung noch ohne weiteres genügt werden, da selbst dort die Anzahl der einzelnen Module überschaubar bleibt und die Routingtabellen angesichts heutiger Preise für Speicher nahezu kostenfrei abgespeichert werden können.

Es sei darauf hingewiesen, dass es besonders bevorzugt ist, die Topologieinformation nicht nur in einem Initialisierungsschritt zu sammeln, sondern auch regelmäßig zu überprüfen, ob eine einmal erhaltene Topologieinformation noch aktuell ist. Dies braucht nicht immer der Fall zu sein, etwa dann, wenn Teile des Systems abgebaut wurden, wenn Ergänzungen und/oder Erweiterungen vorgenommen wurden und/oder wenn einzelne Module defekt geworden sind, was entweder unmittelbar mitgeteilt werden kann, beispielsweise nur an Nachbarmodule oder, per Broadcast, an alle Module des Systems und/oder wenn die defekt gewordenen Systeme nicht mehr in einer erwarteten Zeit antworten, was gleichfalls für eine Störung spricht. Es sei in diesem Zusammenhang darauf hingewiesen, dass es ohne weiteres möglich ist, ein Modul gegebenenfalls von Hand für den dauerhaften Transport in eine einzelne Richtung vorzusehen und dies auch entsprechend codiert anderen, insbesondere benachbarten und/oder allen Modulen mitzuteilen bzw. mitteilen zu lassen, etwa durch ein geeignetes Broadcastsignal oder Propagation aktualisierter Topologieinformation, um die Gesamtstörung eines Systems zu minimieren, wenn Probleme auftreten.

Die Steuerung wird bevorzugt so ausgebildet sein, dass das Modul für den Transport eines ganz bestimmten Warenpaketes reserviert wird. Dies es erlaubt insbesondere, das Modul nach dem Transport des identifizierten Warenpaketes freizugeben. Es sei darauf hingewiesen, dass die Steuerung die Reservierung nicht sofort vornehmen muss, wenn eine Reservierungsanfrage eintrifft und auch nicht eine vorgenommene Reservierung nur ab sofort bis Eintreffen des Warenpaketes erfolgen muss. Vielmehr kann es ausreichen, wenn die Reservierung für einen bestimmten, zukünftigen Zeitraum vorgesehen wird. Dies ist insbesondere bei ausgedehnten Systemen relevant, in welchen die Strecken und damit die im Materialfluss ohnehin erheblichen Transportzeiten groß sind. Hier kann vorab angefragt werden, ob im ungefähr erwarteten oder vorbestimmten Zeitraum die Strecke frei sein wird. Eine Berücksichtigung der durch ein Modul tatsächlich gegebenen Verzögerung kann autark vorgenommen werden, wenn bei der Vorreservierungsanfrage der erwartete Zeitraum der Ankunft des Warenpaketes am Fördermodul mitcodiert wird und bei Anfrage an den Nachbarmodulen hinsichtlich der Abnahme des erwarteten Warenpaketes, für das die Reservierung vorgenommen werden soll, angefragt wird, ob diese zu einem Zeitpunkt bereit sind, das Warenpaket abzunehmen, welcher dem erwarteten Ankunftszeitpunkt im anfragenden Modul zuzüglich der erwarteten oder für ein gegebenes Warenpaket bestimmten Transferzeit durch das Modul entspricht. Wenn Beschränkungen hinsichtlich der maximalen Beschleunigung, der Transportgeschwindigkeit aufgrund zu hoher Lasten und endlicher Motorleistung usw. gegeben sind und diese bei der Anfrage bereits mitgeteilt werden, kann sogar die eigene Transferzeit entsprechend vorbestimmt werden. Auf diese Weise wird in ganz besonderer Weise von der der Erfindung allgemein zugrundeliegenden Erkenntnis Gebrauch gemacht, dass es im Warenpaketfluss darauf ankommt, die endlichen Laufzeiten der Warenpakete zu berücksichtigen. Die Anfrage, ob eine Strecke frei ist, ist im Regelfall selbst bei komplexen Systemen und hoher Auslastung sehr viel schneller als der eigentliche Transport und stellt damit, insbesondere bei hinreichend schnellen Kommunikationswegen und ausreichenden Rechengeschwindigkeiten in den Fördermodulen keine begrenzende Größe dar.

Bevorzugt kann die eigentliche Reservierung dergestalt vorgenommen werden, dass zunächst ein Vorreservierungstoken von einem Nachbarmodul, welches ein Warenpaket gerne senden möchte, angenommen wird, eine Vorreservierung vorgesehen wird, und das Vorreservierungstoken gegebenenfalls mit Veränderungen etwa hinsichtlich der Transferzeit, an eine zielnäher gelegene Nachbarstation weitergereicht wird. Die zielnäher gelegene Nachbarstation kann dabei gemäß einer gespeicherten Topologie bestimmt werden. Wenn das angesprochene stromabwärtige Fördermodul das Vorreservierungstoken empfängt, wird dort ein entsprechender Prozess ablaufen und das Vorreservierungstoken wird, bei vollständig freier vorgesehener Förderstrecke bis zum Zielmodul gereicht, wo es bestätigt und als bestätigt zurück geschickt wird. Die Bestätigung des Vorreservierungstokens lässt dann die Vorreservierung zur Reservierung erstarken. Dass bei Eintreffen mehrerer Vorreservierungen eine später eintreffende unbeantwortet und/oder unbearbeitet bleibt, bis über die Erstarkung der früher eingetroffenen zur Reservierung und/oder deren Ablehnung als unausführbar entschieden ist, sei als bevorzugte Möglichkeit offenbart. Dass gegebenenfalls auch eine später eintreffende Vorreservierungsanfrage aufgrund einer Priorisierung bevorzugt behandelt werden kann, sei erwähnt. Es kann sogar trotz Autarkie eine Priorisierung von bestimmten Waren des Gesamtwarenverkehrs erreicht werden, wenn z.B. für hoch priorisierte Waren ungeachtet einer bereits an einen Port weitergereichten Vorreservierungsanfrage noch ein zweites, höher priorisiertes nachgesendet werden kann.

Es sei erwähnt, dass ein Nachbarmodul als zielnäher angesehen wird, wenn sich über dieses Nachbarmodul das Ziel erreichen lässt; dabei ist nicht zwingend gesagt, dass unbedingt die Gesamtwegstrecke oder die Gesamtlaufzeit, wie sie insbesondere auch in der Routingtabelle mitabgespeichert sein kann, kürzer geworden sein muss. Vielmehr ist denkbar, dass ein Ziel längs eines Kreises liegt, zu dem auch das Fördermodul gehört, dass aber eine Umlaufrichtung entlang der längeren Kreisbahn gewählt werden muss, weil die Weiterleitung in Richtung des kürzeren Weges an bereits reservierten Modulen scheitert.

Es ist aus dem Vorstehenden einsichtig, dass das Modul typisch dazu ausgebildet ist, im Falle der eigenen Reserviertheit die Annahme eines Vorreservierungstokens zu verweigern. Es ist im übrigen bevorzugt, die Vorreservierung nur auf Bestätigung durch das Zielmodul zur Reservierung erstarken zu lassen, weil auf diese Weise sichergestellt wird, dass nicht durch einen Versagensfall schweigende und nur deshalb eine Annahme nicht verweigernde Module auf dem vorgesehenen Transportweg angeordnet sind.

Die Steuerung wird, wie aus dem Vorstehenden ersichtlich ist, also typisch dazu ausgebildet sein, ein Vorreservierungstoken entsprechend des darin codierten Warenpaketziels und der in der Steuerung gespeicherten Topologieinformation, insbesondere der in einer Routingtabelle abgelegten beziehungsweise gespeicherten Topologieinformation weiterzuleiten. Es wird weiter einsichtig sein, dass die Steuerung bevorzugt so ausgebildet ist, dass dann, wenn stromabwärtige Fördermodule besetzt sind oder aus anderen Gründen die Vorreservierung verweigern, das jeweilige Fördermodul einerseits die eigene Vorreservierung aufhebt und dies andererseits dem anfragenden, stromaufwärtigen Fördermodul mitteilt.

Es kann im übrigen vorgesehen sein, dass eine Vorreservierung bereits dann verweigert wird, wenn das jeweilige Modul bereits einmal entsprechende Token erfolglos an alle oder eine hinreichend große Zahl Nachbarmodule gesandt hat, ohne dass von dort eine Vorreservierung als zur Reservierung erstarkt bestätigt wurde; es sei allerdings darauf hingewiesen, dass dies nicht deshalb bei einem Token nur deshalb völlig automatisch geschehen muss, weil eine entsprechende Anfrage bereits einmal eingetroffen ist. So kann beispielsweise der Transport zu einem gegebenen Fördermodul über unterschiedliche und damit auch unterschiedlich lange Wege geschehen. Gerade dann, wenn nicht nur eine einfache Reservierung in den Modulen erfolgt, sondern die Reservierung auch für eine bestimmte zukünftige Zeit beziehungsweise einen erwarteten Transportzeitraum vorgenommen wird, kann durch die Wahl anderer Wege und insbesondere dadurch bedingte, vor dem Fördermodul eingetretene Verzögerungen des Warenpaketempfangs ein Fall eintreten, bei dem die zuvor reservierten, stromabwärtigen Fördermodule für die jetzt später liegende Warenpaketabnahme wieder frei geworden sind. Dies wird gegebenenfalls autark vom System berücksichtigt.

Schutz wird auch beansprucht für ein komplettes Materialflusssystem mit wenigstens einem, bevorzugt einer Mehrzahl multidirektionaler Fördermodule der Erfindung. Es sei darauf hingewiesen, dass derartige Materialflusssysteme völlig autark betrieben werden können. Gleichwohl wäre es denkbar, die Autarkie nur für den Fall zu nutzen, dass ein Zentralsystem ausfällt und/oder nur einige der mit der erfindungsgemäßen Ausbildung der Fördermodule erhältlichen Vorteile genutzt werden.

Das Materialflusssystem wird typisch Verzweigungen aufweisen, wobei typisch genau an diesen Verzweigungen die multidirektionalen Fördermodule angeordnet sind. Typisch werden wenigstens einige der Module zumindest drei, bevorzugt vier Nachbarn aufweisen; dort, wo Module mit vier Nachbarn vorgesehen sind, ist es bevorzugt, diese nicht in Doppelkreisen anzuordnen, also überwiegend für den Quertransport einzusetzen. Der Hintergrund hierfür ist, dass in Topologien entsprechend einer "8" besondere Probleme bei sehr großer Auslastung des Materialflusssystems entstehen können. Hier kann es durch hohe Besetzung der Förderstrecke eher zu einem zum Teil erheblichen Abfall der Förderleistung kommen.

Wenn Elemente vorgesehen werden, an denen Warenpakete einbeziehungsweise ausgeschleust werden, so ist es bevorzugt, diese Elemente temporär für ihre jeweilige Benutzung als entweder nur Einschleuselement oder als nur Ausschleuselement zu reservieren. Zugleich ist es bevorzugt, die Einschleus- beziehungsweise Ausschleuselemente nicht in eine lineare Förderstrecke sondern in einer Querstrecke, die auf eine lineare Förderstrecke führt, einzusetzen, um Stockungen des Warenpakettransfers zu verringern. Besonders bevorzugt ist es, wenn Einschleus- beziehungsweise Ausschleusmodule von anderen Modulen, insbesondere von allen Modulen des Materialflusssystems Informationen über den Benutzungsgrad beziehungsweise Reservierungszustand erhalten und dazu ausgebildet sind, das Einschleusen beziehungsweise Ausschleusen von Warenpaketen abhängig vom Füll- beziehungsweise Nutzungsgrad des Systems zu gestalten. Der Hintergrund hierfür ist, dass die Gesamtförderleistung eines Materialflusssystems bei nahezu vollbesetzten Modulen deutlich zurückgeht. Es kann in kritischen Fällen insbesondere vorgesehen sein, dass Ausschleusvorgänge priorisiert behandelt werden. Dies ist vor allem dann wichtig, wenn ein Teil der Warenpakete dauernd umläuft, während ein anderer Teil der Warenpakete ein- beziehungsweise ausgeschleust wird. Hier kann ein priorisiertes Ausschleusen bewirken, dass der Füllgrad so weit verringert wird, dass die Transportleistung des Gesamtsystems wieder ansteigt. Eine Priorisierung kann insbesondere dadurch erreicht werden, dass Vorreservierungen wieder aufgehoben werden und/oder Ripp-up-Signale stromaufwärts und stromabwärts gesandt werden.

Schutz wird auch für ein Verfahren zur Steuerung eines Materialflusssystems beansprucht, bei welchem die Module untereinander kommunizieren und im Wege der Kommunikation Materialflusswege von einem Warenpaketstart zu einem Warenpaketziel autonom untereinander aushandeln, wobei insbesondere die Protokolle so gestaltet sind, dass durch gegeneinander laufende Warenpakete verursachte Deadlock-Situationen vermieden werden.

Es sei darauf hingewiesen, dass es nicht zwingend erforderlich ist, die gesamte Wegstrecke bereits vor Lossenden des Warenpaketes vom Start weg zu reservieren; vielmehr ist es auch möglich, an einem einzelnen Modul erst bei Eintreffen eines Paketes über dessen tatsächliche Weiterleitung zu entscheiden; bei bidirektional arbeitenden Modulen könnte allerdings dann das Problem entstehen, dass zwei unmittelbar benachbarte Module sich wechselseitig Pakete zusenden wollen, was zu einer klassischen Deadlock-Situation führt.

In besonderen Fällen können auch beide Verfahren, also Vorreservierung und Reservierung in Echtzeit kurz vor Weitergabe des Warenpakets miteinander kombiniert werden. Dies ist etwa bevorzugt, weil so zunächst eine Strecke reserviert werden kann; vor Weiterleiten eines Warenpaketes von einem jeweiligen Modul kann dann aber noch einmal überprüft werden, ob die zuvor vereinbarte Weiterleitung tatsächlich erfolgen soll oder ob etwa zwischenzeitlich ein stromabwärtiges Modul defekt geworden ist und/oder ob es z.B. zum Ausschleusen von Warenpaketen aus einem hochbelasteten System zur Verbesserung der Gesamtperformance zwischenzeitlich benötigt wird und insoweit entweder ein Weitertransport verzögert oder eine Wegneuwahl erfolgen soll.

Durch die Autarkie ist es problemfrei möglich, das System schnell aufzubauen und in Betrieb zu nehmen oder zu modifizieren.

Es sei im Übrigen erwähnt, dass als Warenpaket alle als Einheit verschickten Materialien verstanden werden, was z.B. Körbe mit einer Vielzahl unterschiedlicher Güter etc. umfasst.

Es sei darauf hingewiesen, dass es möglich ist, bei Aufbau eines Systems nach Erfassung der Topologie durch die Module untereinander die von diesen erhaltene Topologieinformation gegebenenfalls abzufragen und auf eine Simulatoreinheit aufzuspielen, die verschiedene Förderaufgabenfälle durchspielt und gegebenenfalls vor und/oder während der eigentlichen Inbetriebnahme auf Schwachstellen des Aufbaus hinweist und/oder bei deren Analyse ergänzend eingesetzt wird. Hier kann gegebenenfalls etwa eine Streckenverdoppelung an kritischen Stellen vorgenommen werden oder dergleichen. Durch eine solche Maßnahme können vorhandene Ressourcen optimiert verwendet werden.

Es sei im übrigen darauf hingewiesen, dass gerade dann, wenn mit hochausgelasteten Materialflusssystemen zu rechnen ist, vorgesehen sein kann, dass ein einzelnes Modul die Weiterleitung von Warenpaketen besonders langsam oder verzögert vornimmt, um das Freiwerden eines stromabwärtigen, zuvor noch blockierten Fördermoduls abzuwarten. Dass eine Reservierung der gewünschten Wegstrecke gegebenenfalls auch nur bis zum nächsten Knoten oder ein Zwischenlager (Parkplatz) möglich ist, sei erwähnt.

Es ist also möglich, verschiedene Routingstrategien wie die Weiterleitung der zu fördernden Einheit bei freier Strecke zum zielnächsten Port, die Reservierung der Wegstrecke lediglich bis zum nächsten Knoten, die durchgängige Reservierung von Warenpaketquelle und Warenpaketsenke und/oder die zeitdiskrete Reservierung vorzunehmen.

Die Erfindung wird im Folgenden nur beispielsweise anhand der Zeichnung beschrieben. In dieser ist dargestellt durch
- Fig. 1: ein erfindungsgemäßes Materialflusssystem mit einem erfindungsgemäßen Fördermodul,
- Fig. 2: eine Draufsicht auf eine beispielhafte Anordnung von Fördermodulen zu einem Materialflussfördersystem und zur Veranschaulichung der Vorteile einer Reservierung für eine bestimmte Zeit,
- Fig. 3a bis Fig. 3c: weitere Beispiele für ein Materialflusssystem mit einer Vielzahl von Quellen(das heißt Warenpaketstartplätzen) und Senken (das heißt Warenpaketzielen) sowie einer Mehrzahl von in unterschiedlichen Topologien angeordneten Fördermodulen, die einzeln fortlaufend nummeriert sind,
- Fig. 4: der theoretisch ermittelte Durchsatz bei der im eingelegten Bild gezeigten Topologie aus Einzelfördermodulen, weiteren Paketquellen und Warenpaketsenken in Abhängigkeit vom Gesamtfüllgrad,
- Fig. 5: eine Topologie, in der durch Beschicken eines Umlaufkreises aus einer Quelle e eine Deadlock-Situation auftreten kann (links) und dieselbe Topologie, wobei aber das kritische Modul 7, das von mehreren Warenpaketsendern Warenpakete erhalten soll, zur Verhinderung von Deadlocks ausgebildet ist (rechts),
- Fig. 6: die jeweils mit den Anordnungen von Fig. 5 erhaltenen Durchsätze in Abhängigkeit vom Systemfüllgrad.

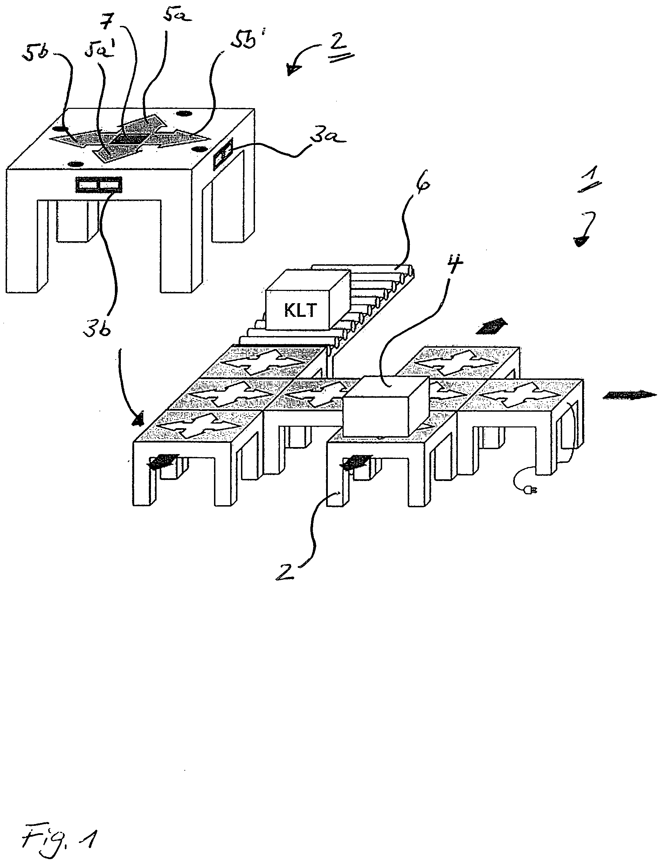

Nach Fig. 1 umfasst ein allgemein mit 1 bezeichnetes Materialflusssystem 1 eine Vielzahl von multidirektionalen Fördermodulen 2, die mit einer Steuerung (nicht gezeigt) versehen sind, und eine Schnittstelle 3a, 3b zur Kommunikation mit anderen Fördermodulen aufweist, wobei das Fördermodul 2 für den Transport eines Warenpaketes 4 in einer gegebenen Warenpaketbewegungsrichtung 5a, 5a', 5b, 5b' wie durch Pfeile 5 angedeutet, ausgebildet ist.

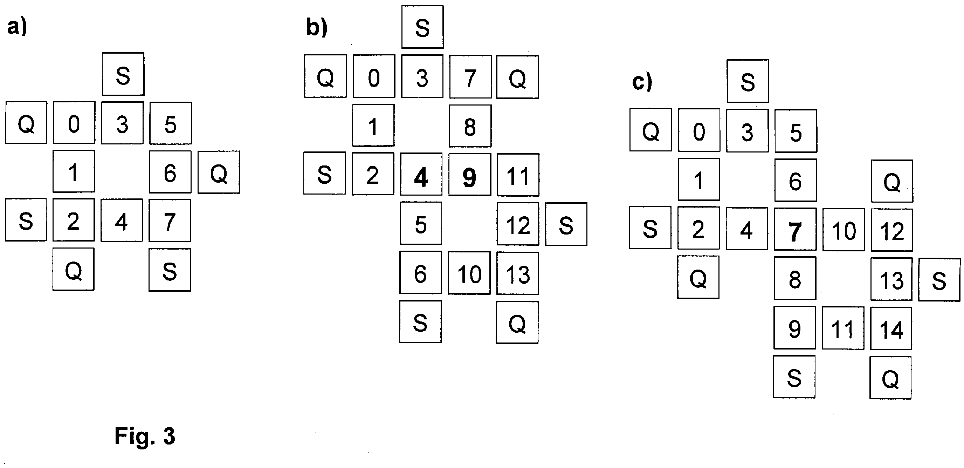

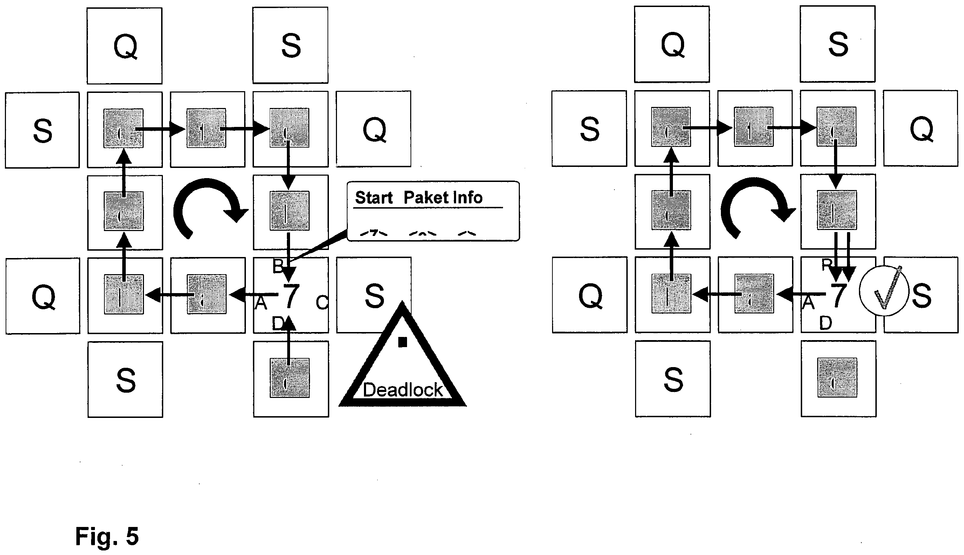

Das Materialflusssystem der vorliegenden Erfindung kann durch Verkettung und Nebeneinanderanordnung einer Vielzahl von multidirektionalen Fördermodulen 2 wie gewünscht in unterschiedlichen Topologien aufgebaut werden, wobei neben den erfindungsgemäßen Fördermodulen 2 auch weitere Förderstrecken, wie beispielsweise eine Rollbahn 6 vorgesehen sein können; gegebenenfalls werden die entsprechenden konventionellen Transportstrecken 6 hinsichtlich einer zu berücksichtigenden Warenpakettransportzeit, einer Belegung usw. von einem ihnen zugeordneten multidirektionalen Fördermodul mitangesprochen und/oder verwaltet; dies verringert die Anzahl komplexer Fördermodule über lange Strecken. Beispiele für Topologien sind ohne jedwede Beschränkungsabsicht in den Fig. 3a bis 3c und in den Fig. 5 (links) und 5 (rechts) dargestellt.

Das einzelne Fördermodul weist in der Steuerung eine logische Schnittstelle auf, die über mehrere Ausgänge 3a, 3b und nicht gezeigte entsprechende Ausgänge an den anderen beiden Seiten mit jeweiligen Schnittstellen der Nachbarmodule kommunizieren kann; der Austausch von Daten über diese Schnittstelle wird weiter unten noch beschrieben.

Das Fördermodul 2 weist weiter einen RFID-Sensor 7 auf, der zur Identifikation eines empfangenen Warenpaketes 4 dient, wobei die RFID-Sensorsignale an die Steuerung gegeben werden, die die Antriebe zur Weiterbewegung eines Warenpaketes 4 in eine der Richtungen 5a oder hierzu gehörenden Gegenrichtung 5a' oder der Richtung 5b oder der hierzu gehörenden Gegenrichtung 5b' ausgebildet sind.

Das Fördermodul 2 ist insoweit autark und bedarf keiner Anbindung an einen Zentralrechner; per se ist es möglich, Energie über die Schnittstellen zu empfangen und/oder weiter zu speisen; bevorzugt wird aber insbesondere dann, wenn schwerere Pakete schnell zu transportieren sind, also hohe Antriebsleistungen benötigt werden, dass die multidirektionalen Fördermodule 2 mit einem eigenen Netzanschluss versehen sind.

Die Steuerung (nicht gezeigt) ist dazu ausgebildet, einerseits Topologieinformation über die Topologie des Materialflusssystems, in dem das jeweilige Fördermodul momentan verbaut ist, zu erhalten und andererseits ein Warenpaket unter Ausnutzung der Topologieinformation und über die Schnittstelle 3 an den physikalischen Ein- und Ausgängen 3a und 3b sowie den nicht gezeigten physikalischen Ein- und Ausgängen von Nachbarmodulen empfangene Information weiterzuleiten. Die Steuerung kann z.B. kostengünstig durch Mikrokontroller realisiert sein, denen jeweils ein entsprechender Speicher für die Topologieinformation, für die Ansteuerung der Antriebe usw. zugeordnet ist und die die moduleigenen Antriebe ordnungsgemäß anzusteuern vermögen.

Es kann das System betrieben werden wie folgt:
Zunächst wird ein einzelnes Fördermodul seine eigene Identität den jeweils angeschlossenen Nachbarmodulen mitteilen und im Gegenzug die Identität der Nachbarmodule empfangen. In einem zweiten Schritt wird dann die bis dahin erhaltene Information wiederum weitergegeben. Ein links neben dem Modul sitzendes Nachbarmodul erhält somit nicht nur die Identität des unmittelbar angrenzenden Fördermoduls, sondern auch die Identität und Position des rechts davon befindlichen sowie gegebenenfalls der oben und unten angeordneten Module. Dies setzt sich fort, bis keine neuen Module mehr erfasst werden, was anzeigt, dass die Topologie vollständig erfasst wurde. Die entsprechenden Informationen können abgelegt werden und zwar dergestalt, dass die Wege zu einem weiter entfernten Modul vollständig abgelegt sind.

Nun kann die Steuerung des Moduls entscheiden, wenn es aufgefordert wird, ein Warenpaket einem bestimmten Ziel zuzuleiten, welchen der Modul-Nachbarn sie als potenziellen Abnehmer anspricht. Auf diese Weise kann, ausgehend von einer Quelle, an der Warenpakete eingeschleust werden, festgelegt werden, entlang welcher Route ein Waren-Paket transportiert werden soll. Auf bekannte Routing-Algorithmen, z.B. aus dem Elektroniklayout- und/oder IT-Bereich wird insoweit ausdrücklich verwiesen. Dazu wird eine Warenpaketquelle an einem ersten Port ein Vorreservierungstoken absetzen, mit welchem angefragt wird, ob das Nachbarmodul bereit ist, ein Paket anzunehmen. Sofern dieses Nachbarmodul nicht selbst das Ziel ist, wird das Nachbarmodul sich vorreservieren, und bei einem wiederum ihm aufgrund der aufgebauten Topologieinformation als geeignet erachteten Nachbarmodul anfragen, ob dieses das Warenpaket gegebenenfalls abzunehmen bereit wäre. Dies setzt sich fort, bis die Vorreservierungsanfrage letztlich das Zielmodul erreicht hat. Sofern dies der Fall ist und das Zielmodul zur Abnahme bereit ist, können entlang des aufgebauten Weges die Vorreservierungen bestätigt werden, was sie zu Reservierungen umwandelt und die Bestätigungen weiter zurück zur Warenpaketquelle gegeben werden, worauf diese das Paket entlang der bestätigten Route absetzt.

Wenn hingegen eines der mit der Vorreservierung angesprochenen Fördermodule nicht zur Abnahme bereit ist, etwa weil zu dem erwarteten Eintreffzeitpunkt das Modul bereits belegt ist, kann eine entsprechende Rückmeldung zurück zum Startmodul gesandt werden. In einem solchen Fall kann in einem näher zum Startmodul liegenden Fördermodul versucht werden, eine andere Route aufzubauen. Dazu wird die Vorreservierungsanfrage, das heißt das Vorreservierungstoken an eine anderes Nachbarmodul als das zuvor angesprochene abgesetzt. Auf diese Weise wird nach und nach abgeklärt, ob ein Weg aufgebaut werden kann.

Auf diese Weise kann ein Weg gefunden werden für einen Transport eines Warenpaketes von einer Quelle zu einem Ziel. Wenn dies nicht bei einem ersten Versuch gelingt, etwa weil sämtliche Transportwege aufgrund extrem hoher Auslastung des Materialflusssystems belegt sind, wird typisch ein zweiter Versuch unternommen, eine Route aufzubauen. Dieser zweite Versuch kann gegebenenfalls mit einer geringen Verzögerung erfolgen, die sich an den Zeitkonstanten bemisst, mit welchen das System seine Transport vornimmt, also beispielsweise abhängig von den Wegstrecken und Transportgeschwindigkeiten entlang des Systems. Gelingt auch nach mehrfachem Versuch ein Aufbau nicht, was beispielsweise dann der Fall ist, wenn mehrere Fördermodule ausgefallen sind, kann ein Alarm ausgegeben werden.

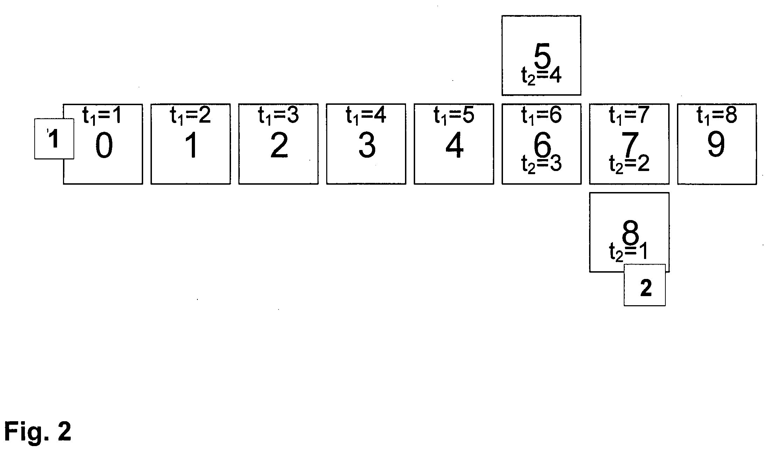

Es ist vorteilhaft, wenn mit der Reservierung mitgeteilt wird, wann etwa mit dem Eintreffen des Warenpaketes zu rechnen ist. Dies ist dargestellt in Fig. 2. Hier soll von einer Stelle 1 zu einer Stelle 9 ein Warenpaket geschickt werden, während zugleich von einer Stelle 2 zu einer Stelle 5 ein Paket quer befördert wird, und zwar über die Module 8, 7 und 6. Wenn beide Pakete zeitgleich abgeschickt werden und jedes Modul die gleiche Zeit für den Weitertransport des jeweiligen Warenpaketes benötigt, tritt, wie die eingezeichneten Zeiten t₁, t₂ auf den jeweiligen Modulen zeigen, keine Beeinträchtigung auf. Beide Pakete können also gleichzeitig transportiert werden, sofern bei der Modulreservierung die Eintreff- und Auslaufzeiten berücksichtigt werden. Dies ist daher bevorzugt.

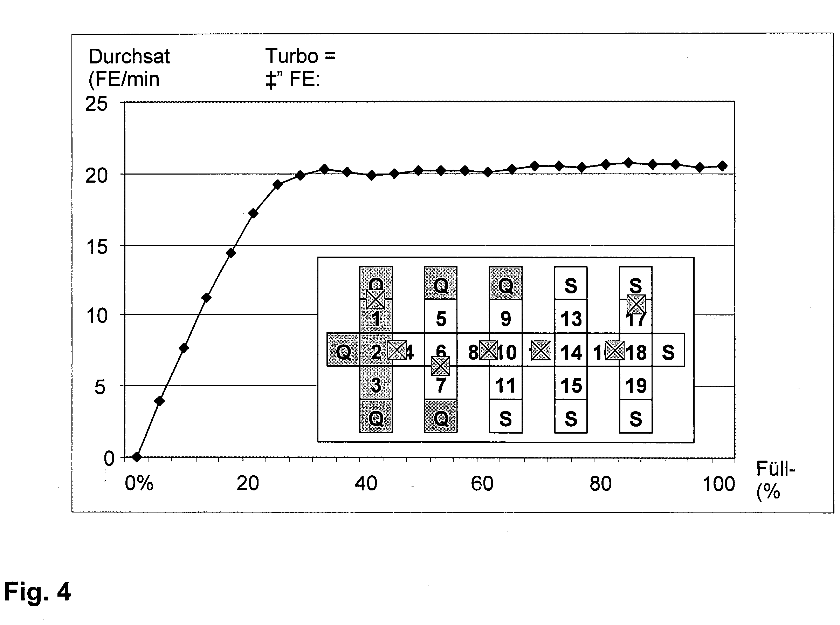

Mit dem System können hohe Durchsätze erreicht werden. Dies ist für die Topologie einer Fischgräte in Fig. 4 gezeigt. Hierbei ist der Durchsatz einer bestimmten Fördergeschwindigkeit in Abhängigkeit vom Füllgrad dargestellt. Der Durchsatz erreicht ab etwa 25 % sein Maximum, wo er ungefähr verbleibt.

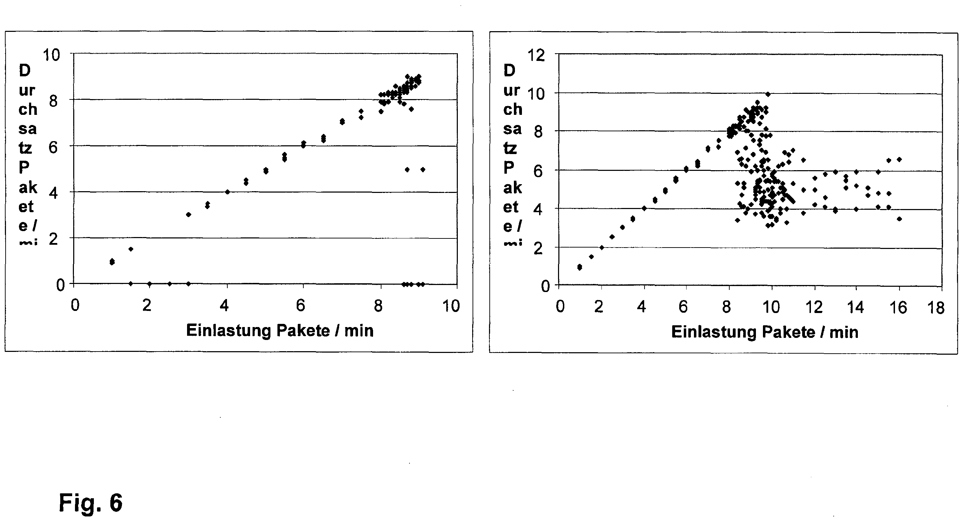

Anders sieht dies aus, wenn Situationen auftreten können, bei denen sich Module des Materialflusssystems wechselseitig behindern können. In solchen Fällen kann es zu einem Deadlock kommen, wenn keines der Module mehr in der Lage ist, noch ein Paket abzunehmen. In dem gegebenenfalls bei wenigstens einem Modul, in Fig. 5 rechts Modul 7, vermieden wird, dass weitere Warenpakete eingespeist werden, kann ein solcher Deadlock verhindert werden. Der Effekt auf den Durchsatz ist in Fig. 6 gezeigt.

## Patentansprüche

1. Verfahren zur Steuerung eines Materialflusssystems, worin
Warenpakete auf multidirektionalen Fördermodulen transportiert werden,
welche untereinander kommunizieren,
um Materialflusswege
von einem Warenpaketstart
zu einem Warenpaketziel
autonom untereinander auszuhandeln,
indem
Module
für den Transport eines bestimmten, identifizierbaren Warenpakets
reserviert
und
nach dem Transport des Warenpakets
freigegeben werden,
dadurch gekennzeichet, dass von den Modulen
ein Vorreservierungstoken von einem Nachbarmodul angenommen wird,
eine Vorreservierung für den Warenpakettransport in einer bestimmten Warenpaketbewegungsrichtung erfolgt,
das Vorreservierungstoken
an ein gemäß Topologieinformation zielnäher
gelegenes und somit stromabwärtiges, die Vorreservierung noch nicht verweigert habendes Nachbarmodul weitergereicht wird,
und entweder
auf Bestätigung der Vorreservierung von einem stromabwärtigen Fördermodul
die Vorreservierung zu einer Reservierung erstarkt, wobei
sich die Module
für den Transport eines Warenpakets
in einer bestimmten Warenpaketbewegungsrichtung und
zu einer bestimmten zukünftigen Zeit oder
für einen bestimmten zukünftigen Zeitraum
reservieren,
oder im Besetzt-Fall, eine Vorreservierungsverweigerung empfangen wird,
bei Empfang einer Vorreservierungsverweigerung das Token an
weitere, gemäß gespeicherter Topologieinformation zum Warenpaketziel führende Nachbarmodule gesendet wird und /oder nach Empfang von Vorreservierungsverweigerungen durch alle oder eine ausreichende Zahl von Nachbarn selbst eine Vorreservierungsverweigerung an ein stromaufwärtiges Fördermodul gesendet wird und eine Vorreservierung aufgehoben wird.

2. Verfahren nach dem vorhergehenden Anspruch, **dadurch gekennzeichnet, dass** auf zumindest einem Modul sukzessive eintreffende Warenpakete in jeweils entgegengesetzten Richtungen transportiert werden.

3. Verfahren nach einem der vorhergehenden Ansprüche, da-durch gekennzeichnet, dass auf zumindest einem Modul ein Warenpaket in einer Richtung transportiert wird, die aus zumindest vier möglichen Richtungen, insbesondere vorwärts, rückwärts, links oder rechts, ausgewählt wird.

4. Verfahren nach einem der vorhergehenden Ansprüche, **dadurch gekennzeichnet, dass** Warenpakete an zumindest einem Modul identifiziert werden, insbesondere unter Verwendung zumindest eines von Barcodeleser, RFID-Transponder, Gewichtssensor, Größensensor, Farbsensor, Kamera mit Bilderkennung.

5. Verfahren nach einem der vorhergehenden Ansprüche, **dadurch gekennzeichnet, dass** die Reservierung eines Materialflussweges über Nächste-Nachbar-Kommunikationswege erfolgt, und zwar über eine Schnittstelle, die einen jeweiligen Ein-/Ausgang für jede Nächste-Nachbar-Verbindung aufweist.

6. Verfahren nach einem der vorhergehenden Ansprüche, **dadurch gekennzeichnet, dass** Topologieinformation über das Materialflusssystem durch Kommunikation von Fördermodulen untereinander an wenigstens einem Modul ergänzt und/oder aktualisiert wird, insbesondere durch. Routingtabellentausch und erhaltene Topologieinformation gespeichert wird, insbesondere an wenigstens einem Modul lokal.

7. Verfahren nach einem der vorhergehenden Ansprüche, **dadurch gekennzeichnet, dass** ein Vorreservierungstoken entsprechend des im Token codierten Warenpaketziels und der gespeicherten Topologieinformation, insbesondere der in einer Routingtabelle gespeicherten Topologieinformation, weitergeleitet wird.

8. Verfahren nach einem der vorhergehenden Ansprüche, **dadurch gekennzeichnet, dass** warenpaketbeförderungsrelevante Parameter, insbesondere maximal zulässige Beschleunigungen, zwischen Modulen ausgetauscht werden.

9. Verfahren nach einem der vorhergehenden Ansprüche, **dadurch gekennzeichnet, dass** auf einen wiederholten Empfang eines Vorreservierungstokens für ein und dasselbe Warenpaket eine Vorreservierung verweigert und eine Verweigerungsmeldung abgesetzt wird.

10. Verfahren nach einem der vorhergehenden Ansprüche, **dadurch gekennzeichnet, dass** bei Vorliegen einer Reservierung zumindest bestimmte andere Reservierungen verweigert werden, insbesondere zumindest zeitweise in Gegenrichtung zur Richtung der Reservierung.

11. Verfahren nach einem der vorhergehenden Ansprüche, **dadurch gekennzeichnet, dass** Module ihren Benutzungs-und/oder Reservierungszustand an wenigstens ein Einschleus- und/oder Ausschleusmodul senden, insbesondere ein auch zum Ein- oder Ausschleusen verwendbares Modul, und die Einschleus- und Ausschleusmodule materialflusssystemfüllgradabhängig einschleusen und/oder ausschleusen, insbesondere unter Priorisierung des Ausschleusens bei hohem Füllgrad.

12. Multidirektionales Fördermodul mit
einer Steuerung für die Warenpaketbewegungsrichtung
und
einer Schnittstelle zur Kommunikation mit anderen Fördermodulen, wobei
die Steuerung dazu ausgebildet ist,
das Fördermodul
für den Transport zumindest eines bestimmten,
identifizierbaren Warenpaketes
in einer gegebenen Warenpaketbewegungsrichtung
im Ansprechen auf über die Schnittstelle empfangene Signale
zu reservieren, und
das Modul
nach dem Transport des Warenpaketes
freizugeben,
wobei die Steuerung dazu ausgebildet ist,
eine Reservierung für den Transport des Warenpaketes in einer bestimmten Warenpaketbewegungsrichtung und
für eine bestimmte zukünftige Zeit und/oder
einen bestimmten zukünftigen Zeitraum vorzusehen,
indem
die Steuerung dazu ausgebildet ist,
ein Vorreservierungstoken von einem Nachbarmodul anzunehmen,
eine Vorreservierung
für den Transport
zumindest eines Warenpaketes
in einer bestimmten Warenpaketbewegungsrichtung vorzusehen,
das Vorreservierungstoken
an ein gemäß einer gespeicherten Topologieinformation zielnäher gelegenes, eine Vorreservierung noch nicht verweigert habendes,
stromabwärtiges Fördermodul
weiterzureichen,
und entweder
auf Bestätigung der Vorreservierung
von dem stromabwärtigen Fördermodul,
die Vorreservierung zur Reservierung erstarken zu lassen,
wobei
die Steuerung dazu ausgebildet ist, dass
sich die Module
für den Transport eines Warenpakets in einer bestimmten Warenpaketbewegungsrichtung und
zu einer bestimmten zukünftigen Zeit oder
für einen bestimmten zukünftigen Zeitraum reservieren,
oder im Besetzt-Fall, eine Vorreservierungsverweigerung empfangen wird,
bei Empfang einer Vorreservierungsverweigerung das Token an weitere, gemäß gespeicherter Topologieinformation zum Warenpaketziel führende Nachbarmodule gesendet wird und /oder nach Empfang von Vorreservierungsyerweigerungen durch alle oder eine ausreichende Zahl von Nachbarn selbst eine Vorreservierungsverweigerung an ein stromaufwärtiges Fördermodul gesendet wird und eine Vorreservierung aufgehoben wird.

## Claims

1. Method for controlling a material flow system, in which goods packages are transported on multidirectional conveyor modules
that communicate with one another
in order to autonomously negotiate with one another
material flow paths
from a goods package start
to a goods package destination
by
reserving modules
for the transport of a particular, identifiable goods package
and
releasing them after transport of the goods package,
**characterized in that**
by the modules
a prior reservation token from a neighbouring module is accepted,
prior reservation for the transport of the goods package in a particular direction of movement of goods packages is effected,
the prior reservation token is forwarded to a neighbouring module that, on the basis of topology information, is situated closer to the destination and hence is downstream and that has not yet denied the prior reservation,
and either,
upon confirmation of the prior reservation by a downstream conveyor module,
the prior reservation is strengthened into a reservation,
wherein the modules
are reserved
for the transport of a goods package in a particular direction of movement of goods packages
and at a particular future time or for a particular future period,
or
in the event of being occupied,
a prior reservation denial is received,
upon receiving a prior reservation denial, the token is sent to further, neighbouring modules that lead to the goods package destination on the basis of stored topology information, and/or, following reception of prior reservation denials by all or a sufficient number of neighbours,
by themselves a prior reservation denial is sent to an upstream conveyor module and a prior reservation is cancelled.

2. Method according to the preceding claim, **characterized in that** on at least one module successively arriving goods packages are transported in respective opposite directions.

3. Method according to either of the preceding claims, **characterized in that** on at least one module a goods package is transported in a direction that is selected from at least four possible directions, particularly forward, backward, left or right.

4. Method according to one of the preceding claims, **characterized in that** goods packages are identified on at least one module, particularly by using at least one of barcode reader, RFID transponder, weight sensor, size sensor, colour sensor, camera with image recognition.

5. Method according to one of the preceding claims, **characterized in that** a reservation of a material flow path is effected using next neighbour communication paths, specifically using an interface that has a respective input/output for each next neighbour connection.

6. Method according to one of the preceding claims, **characterized in that** topology information about the material flow system is complemented and/or updated on at least one module by virtue of communication by conveyor modules among one another, particularly by virtue of routing table exchange, and received topology information is stored, particularly on at least one module locally.

7. Method according to one of the preceding claims, **characterized in that** a prior reservation token is forwarded in accordance with the goods package destination that is coded in the token and in accordance with the stored topology information, particularly the topology information stored in a routing table.

8. Method according to one of the preceding claims, **characterized in that** parameters that are relevant to the conveyance of goods packages, in particular maximum admissible accelerations, are interchanged between modules.

9. Method according to one of the preceding claims, **characterized in that** upon repeated receipt of a prior reservation token for one and the same goods package a prior reservation is denied and a denial message is sent.

10. Method according to one of the preceding claims, **characterized in that** the presence of a reservation prompts at least particular other reservations to be denied, particularly at least temporarily in the direction opposite to the direction of the reservation.

11. Method according to one of the preceding claims, **characterized in that** modules send their use and/or reservation condition to at least one inward-transfer and/or outward-transfer module, particularly a module that can also be used for inward or outward transfer, and the inwardtransfer and outward-transfer modules transfer inward and/or transfer outward on the basis of the material flow system filling level, particularly by prioritizing the outward transfer in the case of a high filling level.

12. Multidirectional conveyor module having
a controller for the direction of movement of goods packages and
an interface for communicating with other conveyor modules,
wherein
the controller is designed to reserve the conveyor module for the transport of at least one particular, identifiable goods package in a given direction of movement of goods packages in response to signals received via the interface, and to release the module after the transport of the goods package, wherein the controller is designed to provide a reservation for the transport of the goods package in a particular direction of movement of goods packages and for a particular future time and/or a particular future period
by virtue of the controller being designed to accept a prior reservation token from a neighbouring module,
to provide a prior reservation for the transport of at least one goods package in a particular direction of movement of goods packages, to forward the prior reservation token to a downstream conveyor module that, on the basis of a stored topology information, is situated closer to the destination and that has not yet denied a prior reservation,
and either,
upon confirmation of the prior reservation by the downstream conveyor module,
to allow the prior reservation to be strengthened into a reservation, wherein the controller is designed such that the modules reserve themselves for the transport of a goods package in a particular direction of movement of goods packages and at a particular future time or for a particular future period,
or
in the event of being occupied,
a prior reservation denial is received, upon receiving a prior reservation denial, the token is sent to further, neighbouring modules that lead to the goods package destination on the basis of stored topology information, and/or, following reception of prior reservation denials by all or a sufficient number of neighbours,
by itself a prior reservation denial is sent out to an upstream conveyor module and a prior reservation is cancelled.

## Revendications

1. Procédé destiné à commander un système de flux de matériel, dans lequel des paquets de produits sont transportés sur des modules de convoyage multidirectionnels,
lesquels communiquent entre eux,
pour négocier de manière autonome entre eux des trajets de flux de matériel, d'un départ de paquets de produits vers une destination de paquets de produits, en ce que des modules sont réservés pour le transport d'un certain paquet de produits identifiable et sont libérés après le transport du paquet de produits,
**caractérisé en ce que**
par des modules un jeton de préréservation provenant d'un module voisin est accepté, une préréservation pour le transport des paquets de produits dans une certaine direction de déplacement des paquets de produits s'effectue,
le jeton de préréservation est passé à un module voisin plus proche de la destination selon information topologique et donc en aval, n'ayant pas encore refusé la préréservation,
et
soit sur confirmation de la préréservation par un module de convoyage en aval,
la préréservation évolue en une réservation,
les modules se réservant pour le transport d'un paquet de produits dans une certaine direction de déplacement des paquets de produits et pour un certain temps à venir ou pour une certaine période à venir,
soit en cas d'occupation,
un refus de préréservation est réceptionné,
à la réception d'un refus de préréservation, le jeton est envoyé à d'autres modules voisins menant selon information topologique mémorisée à la destination du paquet de produits et/ou après réception de refus de préréservations par tous ou un nombre suffisant de voisins, un refus de préréservation est même envoyé à un module de convoyage placé en amont et une préréservation est annulée.

2. Procédé selon la revendication précédente, **caractérisé en ce que** sur au moins un module, des paquets de produits arrivant successivement sont transportés dans des directions respectivement opposées.

3. Procédé selon l'une quelconque des revendications précédentes, **caractérisé en ce que** sur au moins un module, un paquet de produits est transporté dans une direction qui est selectionné à partir d'au moins quatre directions possibles, notamment avant, arrière, gauche ou droite.

4. Procédé selon l'une quelconque des revendications précédentes, **caractérisé en ce que** des paquets de produits sont identifiés sur au moins un module, notamment par utilisation d'au moins un de lecteur de code-barres, transpondeur RFID, capteur de poids, capteur de taille, capteur de couleur, caméra avec reconnaissance d'images.

5. Procédé selon l'une quelconque des revendications précédentes, **caractérisé en ce que** la réservation d'un trajet de flux de matériel s'effectue via des trajets de communications voisins les plus proches, à savoir via une interface qui comporte une entrée/sortie respective pour chaque liaison voisine la plus proche.

6. Procédé selon l'une quelconque des revendications précédentes, **caractérisé en ce qu'**information topologique sur le système de flux de matériel est complétée et/ou mise à jour a au moins un module par communication de modules de convoyage entre eux, notamment par échange de tableaux de routage, et information topologique obtenue est mémorisée, notamment localement sur au moins un module.

7. Procédé selon l'une quelconque des revendications précédentes, **caractérisé en ce qu'**un jeton de préréservation est relayé conformémemt a la destination du paquet de produits codée dans le jeton et a d'information topologique mémorisée, notamment d'information topologique mémorisée dans un tableau de routage.

8. Procédé selon l'une quelconque des revendications précédentes, **caractérisé en ce que** des paramètres pertinents pour le convoyage de paquets de produits, notamment des accélérations maximales admissibles, sont échangés entre des modules.

9. Procédé selon l'une quelconque des revendications précédentes, **caractérisé en ce que** suite à une réception répétée d'un jeton de préréservation pour un seul et même paquet de produits, une préréservation est refusée et un message de refus est emis.

10. Procédé selon l'une quelconque des revendications précédentes, **caractérisé en ce qu'**en présence d'une réservation, au moins certaines autres réservations sont refusées, notamment au moins temporairement dans la direction opposée à la direction de la réservation.

11. Procédé selon l'une quelconque des revendications précédentes, **caractérisé en ce que** des modules envoient leur état d'utilisation et/ou de réservation à au moins un module d'entrée et/ou de sortie, notamment à un module utilisable également pour faire entrer ou sortir, et en fonction du taux de remplissage du système de flux de matériel, les modules d'entrée et de sortie font entrer et/ou sortir, notamment en priorisant les sorties en cas de taux de remplissage élevé.

12. Module de convoyage multidirectionnel, avec
un système de commande pour la direction de déplacement des paquets de produits et avec
une interface pour la communication avec d'autres modules de convoyage,
le système de commande étant conçu pour réserver le module de convoyage pour le transport d'au moins un certain paquet de produits identifiable dans une direction donnée de déplacement de paquets de produits, en réponse à des signaux réceptionnés via l'interface, et pour libérer le module après le transport du paquet de produits,
le système de commande étant conçu pour prévoir une réservation pour le transport du paquet de produits dans une certaine direction de déplacement de paquets de produits et pour un certain temps à venir et/ou pour une certaine période à venir, en ce que
le système de commande est conçu pour accepter un jeton de préréservation de la part d'un module voisin, pour prévoir une préréservation pour le transport d'au moins un paquet de produits dans une certaine direction de déplacement de paquets de produits, pour retransmettre le jeton de préréservation à un module de convoyage plus proche selon une information topologique mémorisée, n'ayant pas encore refusé une préréservation
et soit, sur confirmation de la préréservation, pour faire évoluer la préréservation en réservation par le module de convoyage en aval,
le système de commande étant conçu pour que les modules se réservent pour le transport d'un paquet de produits dans une certaine direction de déplacement des paquets de produits et à un certain temps à venir ou pour une certaine période à venir,
soit qu'en cas d'occupation, un refus de préréservation est réceptionné
à la réception d'un refus de préréservation, le jeton soit envoyé à d'autres modules voisins, menant à la destination du paquet de produits selon information topologique mémorisée et/ou qu'après la réception de refus de préréservations par tous ou par un nombre suffisant de voisins, un refus de préréservation est même envoyé à un module de convoyage en amont et qu'une préréservation soit annulée.
